# EUROPEAN PATENT APPLICATION

(11) **EP 1 806 928 A2**
(43) Date of publication of application: **11.07.2007**
(21) Application number: 07100151.5
(22) Date of filing: 05.01.2007
(51) Int. Cl.: H04N 7/24, H04N 7/16, H04N 5/44, H04N 5/00

(54) **Digital TV, digital broadcasting system and control method thereof**

(30) Priority: 10.01.2006 KR 20060002750
(71) Applicant: SAMSUNG ELECTRONICS CO., LTD., Suwon-si, Gyeonggi-do (KR)
(72) Inventor: Choe, Hyun-Chul, Suwon-si, Gyeonggi-do (KR)
(74) Representative: Clark, David James

(57) **Abstract**

A digital broadcasting system having a digital TV (100) including a broadcasting base station (200) which transmits a broadcasting signal having a program and key combination information configured to control a function by the program; and the digital TV (100) includes a user inputting part (40) having a plurality of keys; a receiving part (10,20) which receives the broadcasting signal; a detecting part (35) which detects the program and the key combination information provided through the broadcasting signal; a storing part (37) which stores the program and the key combination information outputted by the detecting part (35); and a controller (60) which performs a function of the combination of the inputted keys on the basis of the key combination information.

## Description

Apparatuses and methods consistent with the present invention relate to digital TV, digital broadcasting systems and control methods thereof, and more particularly but not exclusively to digital TV and digital broadcasting systems capable of providing various kinds of application programs through a broadcasting signal, and control methods thereof.

Recently, with the increase in digital broadcast programming, the demand for digital televisions (TV) has increased. Unlike an analog broadcast, a digital broadcasting system converts and compresses a video signal and an audio signal into digital signal packets. Then, the digital broadcasting system transports the digital signal packets using a transport stream format. Also, digital broadcasting systems can perform data broadcasting by incorporating in a broadcasting signal various kinds of service having additional information such as multimedia and hypermedia information coding experts group (MHEG) information, multimedia home platform (MHP) information, program and system information (PSI) /system information (SI) and the like.

So, by utilizing the data broadcast, the digital broadcasting system can provide various kinds of application programs from a broadcasting base station to the digital TV, such as, an electronic program guide (EPG) program having broadcasting channel information and various kinds of game programs or the like, in addition to a system program stored in a manufactured digital TV.

The broadcasting base station provides its broadcasting signal and its own application programs to the digital TV whenever the digital TV changes a broadcasting channel. Then, the digital TV may perform a variety of functions provided by various broadcasting base stations by storing the application programs and operating the stored application programs.

However, in a related art digital broadcasting system, the types of the application programs provided by the broadcasting base station become more and more diverse, while the digital TV has a limited amount of manipulating keys. That is, the digital TV, which is provided the application program through the broadcasting signal, has more and more executable application functions, whereas the number of manipulating keys for manipulating functions is physically limited. Thus, it is not easy for the digital TV to actively perform the increased amountof application functions.

Exemplary embodiments of the present invention address the above disadvantages and other disadvantages not described above.

According to a first aspect of the present invention there is provided a digital broadcasting system comprising: a broadcasting base station transmitting a broadcasting signal having program and key combination information for controlling a function of the program; and a digital TV comprising a user inputting part having a plurality of keys; a receiving part which receives the broadcasting signal; a detecting part which detects the program and the key combination information provided through the broadcasting signal; a storing part which stores the program and key combination information outputted by the detecting part; and a controller which performs a function of the combination of the inputted keys on the basis of the key combination information.

Suitably, the controller is arranged to perform a function of the combination of the inputted keys on the basis of the key combination information if a combination of at least two keys inputted within a predetermined time through the user inputting part are inputted, when the program stored in the storing part is operated.

Suitably, the key combination information comprises at least one item of combination data corresponding to a combination of at least two keys, and command data for controlling the function by the program, corresponding to each of the combination data.

Suitably, the controller monitors keys inputted through the user inputting part when the program stored in the storing part is operated, and performs a function according to command data corresponding to the concerned combination data when at least two keys are inputted within a predetermined time and a combination of keys corresponding to one among combination data of the key combination information is inputted.

Suitably, the digital TV further comprises a key combination information determining part which determines whether there is key combination information in the broadcasting signal received through the receiving part, and the detecting part detects the key combination information when determining that there is the key combination information in the broadcasting signal, and processes the detected key combination information as a format capable for the controller to recognize.

Suitably, the storing part further stores basic key information stored in the digital TV, and the controller performs a function of keys inputted through the user inputting part on the basis of the basic key information when the program stored in the storing part is not operated.

Suitably, the program is provided by the broadcasting base station through the broadcasting signal, and comprises an application program for supporting a broadcast provided by the broadcasting base station, the user inputting part comprises at least any one among a plurality of numeral keys, the application key asking for an information display of an application program stored in the storing part, an EPG key asking for an EPG display, an information key asking for a detailed information display, and an EXIT key.

Suitably, the storing part further stores basic key information stored in the digital TV, and the controller performs a function of keys inputted through the user inputting part on a basis of the basic key information when the program stored in the storing part is not operated.

Suitably, the program is provided by the broadcasting base station through the broadcasting signal, and comprises an application program for supporting a broadcast provided by the broadcasting base station, the user inputting part comprises at least any one among a plurality of numeral keys, an application key asking for an information display of the application program stored in the storing part, an EPG key asking for an EPG display, an information key asking for a detailed information display, and an EXIT key.

According to a second aspect of the present invention there is provided a digital TV comprising: a receiving part which receives a broadcasting signal having program and key combination information for controlling a function by the program; a detecting part which detects the program and the key combination information provided through the broadcasting signal; a storing part which stores the program and the key combination information outputted by the detecting part; and a controller which performs a function corresponding to the combination of the inputted keys inputted from a user inputting part on the basis of the key combination information.

Suitably, the controller is arranged to perform the function corresponding to the combination of inputted keys if a combination of at least two keys is inputted within a predetermined time through the user inputting part, when the program stored in the storing part is operated.

Suitably, the key combination information comprises at least one item of combination data corresponding to a combination of at least two keys, and command data for controlling the function by the program, corresponding to each of the combination data.

Suitably, the digital TV further comprises a key combination information determining part which determines whether there is key combination information in the broadcasting signal received through the receiving part, and wherein the detecting part detects the key combination information when determining that there is the key combination information in the broadcasting signal, and processes the detected key combination information as a format capable for the controller to recognize.

Suitably, the storing part further stores basic key information stored in the digital TV, and the controller performs a function of keys inputted through the user inputting part on a basis of the basic key information when the program stored in the storing part is not operated.

Suitably, the storing part further stores basic key information stored in the digital TV, and the controller performs a function of keys inputted through the user inputting part on a basis of the basic key information when the program stored in the storing part is not operated.

According to a third aspect of the present invention there is provided a control method of a digital TV comprising: receiving a broadcasting signal having program and key combination information which controls a function by the program in the digital TV; detecting the program and key combination information from the broadcasting signal, and then storing them, after receiving the broadcasting signal; operating the stored program; monitoring whether a combination of keys inputted corresponds to the key combination information when the program is operated; and performing a corresponding function of the combination of keys on the basis of the stored key combination information, if the combination of keys is inputted.

Suitably, the monitoring comprises monitoring for an input of at least two keys from the user inputting part within a predetermined time.

Suitably, the key combination information comprises at least one item of combination data corresponding to a combination of at least two keys, and command data for controlling a function by the program, corresponding to each of the combination data.

Suitably, the performing a function of the combination of keys, in case that the stored program is operated, comprises monitoring whether a key is inputted through the user inputting part, determining whether the combination of keys corresponding to one among combination data of the key combination information is inputted when at least two keys is inputted within a predetermined time, and performing a function according to command data corresponding to the concerned combination data when the combination of keys corresponding to one among combination data of the key combination information is inputted.

Suitably, the detecting the key combination information, and then storing it, comprises determining whether there is key combination information in the received broadcasting signal, detecting the key combination information from the received broadcasting signal when there is the key combination information in the received broadcasting signal, and processing the detected key combination information as a format capable of being recognized.

Suitably, the control method of the digital broadcasting system further comprises storing basic key information stored in the digital TV, performing a function of the key inputted through the user inputting part on a basis of the basic key information when the stored program is not operated.

Suitably, the program provided through the broadcasting signal, comprises an application program for supporting a broadcast provided by a broadcasting base station.

Suitably, the user inputting part comprises at least any one among a plurality of numeral keys, an application key asking for an information display of the application program stored in the storing part, an EPG key asking for an EPG display, an information key asking for a detailed information display, and an EXIT key.

Suitably, the control method of the digital broadcasting system further comprises storing basic key information stored in the digital TV, performing a function of the key inputted through the user inputting part on a basis of the basic key information when the stored program is not operated.

Suitably, the program provided through the broadcasting signal, comprises an application program for supporting a broadcast provided by a broadcasting base station.

Suitably, the user inputting part comprises at least any one among a plurality of numeral keys, an application key asking for an information display of the application program stored in the storing part, an EPG key asking for an EPG display, an information key asking for a detailed information display, and an EXIT key.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a control block diagram of a digital broadcasting system according to an exemplary embodiment of the present invention.
FIG. 2 is an illustrative diagram showing a selection of an operation of an application program provided through a broadcasting signal in the digital broadcasting system according to the exemplary embodiment of the present invention.
FIG. 3 is an illustrative diagram showing a display of information on an application program by an application key in the digital broadcasting system according to the exemplary embodiment of the present invention.
FIG. 4 is an illustrative diagram showing a display of broadcasting program information of a broadcasting channel by a combination of keys in the digital broadcasting system according to the exemplary embodiment of the present invention.
FIG. 5 is a control flowchart of the digital broadcasting system according to the exemplary embodiment of the present invention.

Hereinafter, the exemplary embodiments of the present invention will be described in detail with reference to the accompanying drawings.

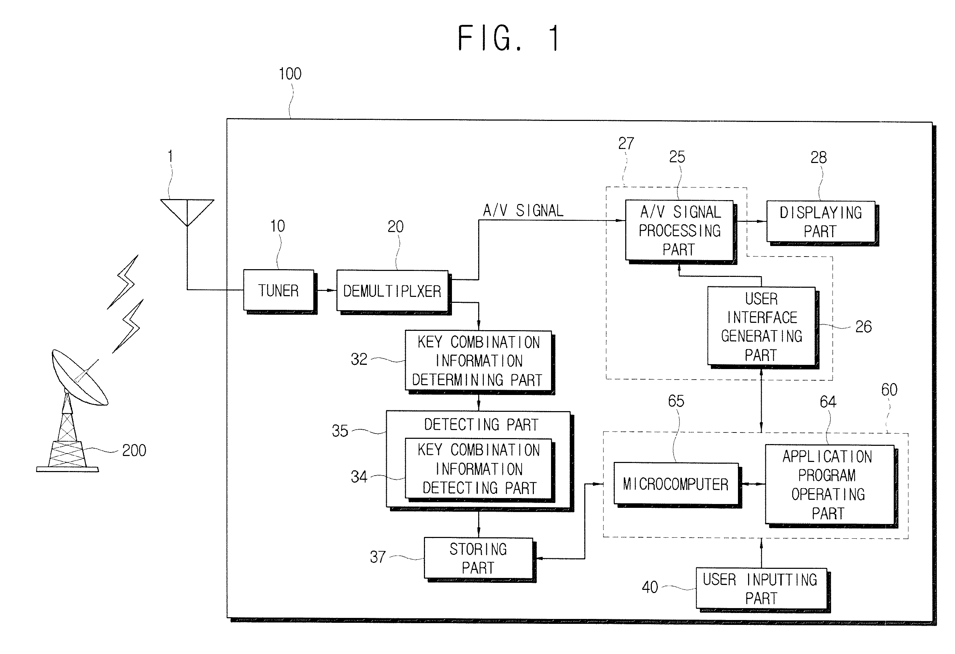

FIG. 1 is a control block diagram of a digital broadcasting system according to an exemplary embodiment of the present invention. As illustrated, the digital broadcasting system comprises a digital TV 100 and a broadcasting base station 200.

Unlike a means of providing an analog broadcasting signal, the broadcasting base station 200 converts and compresses a video signal and an audio signal into the digital signal packet. Then, the broadcasting base station 200 transmits the compressed digital signal packet as a format of a transport stream. Also, the broadcasting base station 200 provides the transport stream, by which the broadcasting signal is packetized for transmission, by allowing the transport stream to carry various kinds of service additional information such as MHEG information, MHP information, PSI/SI, and its own various kinds of application programs and the like. At this time, the broadcasting base station 200 provides the broadcasting signal by allowing the broadcasting signal to further carry key combination information for controlling a function of the provided application program. Here, it is not necessary that the broadcasting base station 200 transmit the broadcasting signal by allowing the PSI/SI information of the broadcasting signal to carry the key combination information.

At this time, the key combination information may be a key interface for controlling a function of the application program provided by the broadcasting base station 200. Also, the key combination information may comprise at least one item of combination data corresponding to a combination of at least two keys, and command data for controlling the function by the application program corresponding to each item of combination data.

Here, through the broadcasting signal, the broadcasting base station 200 may provide an application program and an item of key combination information corresponding to the application program. The broadcasting base station 200 may also provide plural application programs and plural items of key combination information corresponding to each application program thereof through the broadcasting signal. At this time, when the broadcasting base station 200 provides the plural application programs, each of the provided plural items of key combination information may be different from each other. Also, the broadcasting base station 200 may provide plural application programs, and an item of key combination information corresponding to one application program among the plural application programs through the broadcasting signal.

The digital TV 100 comprises an antenna 1, a tuner 10, a demultiplexer 20, a function part 27, a displaying part 28, a key combination information determining part 32, a detecting part 35, a storing part 37, a user inputting part 40 and a controller 60.

The tuner 10 tunes a broadcasting signal having a frequency band corresponding to a tuning control signal from broadcasting signals received through the antenna 1. The selected broadcasting signal of a specific channel is outputted from the transport stream through a vestigial sideband modulation (VSB) demodulating process, an error correction process and the like, by an 8-VSB demodulator (not shown).

The demultiplexer 20 demultiplexes the outputted broadcasting signal of a transport stream format from the 8-VSB demodulator (not shown) into an audio signal, a video signal (A/V signal) and all kinds of service additional information, and outputs them in a bit stream format.

The function part 27, which performs various operations of broadcasting replays and display functions, comprises an A/V signal processing part 25 and a user interface generating part 26.

The A/V signal processing part 25 processes the audio signal and the video signal outputted from the demultiplexer 20 as a format capable of outputting them to a user. That is, it is possible that the A/V signal processing part 25 comprises a video decoder (not shown) and a scaler (not shown) for processing the video signal to display on the displaying part 28, an audio decoder (not shown) for processing the audio signal to output through a speaker (not shown), and the like.

The user interface generating part 26 generates a user interface menu signal in order to display various kinds of user interface menus on the displaying part 28. By control of the controller 60, the user interface generating part 26 may generate a basic user interface menu signal originally stored in the digital TV 100, or generate an application user interface menu signal according to an application program provided from the broadcasting base station 200.

The displaying part 28 receives the video signal from the A/V signal processing part 25 and displays an image. The displaying part 28 comprises a display panel displaying the image, and a panel driving part allowing the image to be displayed on the display panel by processing the video signal inputted from the A/V signal processing part 25. Also, the digital TV 100 may further comprise a speaker (not shown) connected to the output of the A/V signal processing part 25 that outputs the audio signal.

All kinds of service additional information comprised in the PSI/SI information demultiplexed through the demultiplexer 20 is stored in a memory (not shown) by table of each data. Information necessary to be displayed on a screen among the service additional information is processed through the A/V signal processing part 25 and mixed with a tuned A/V signal. Then, the processed service additional information can be outputted to the displaying part 28.

The user inputting part 40 outputs a key signal to the controller 60 according to a user's manipulation. The user inputting part 40 comprises a plurality of numeral keys, an application key asking for an information display about an application program stored in the storing part 37, an EPG key asking for an EPG display, an information key asking for a detailed information display, and an Exit key. Also, the user inputting part 40 may further comprise a key signal generating part generating a key signal corresponding to a key manipulation.

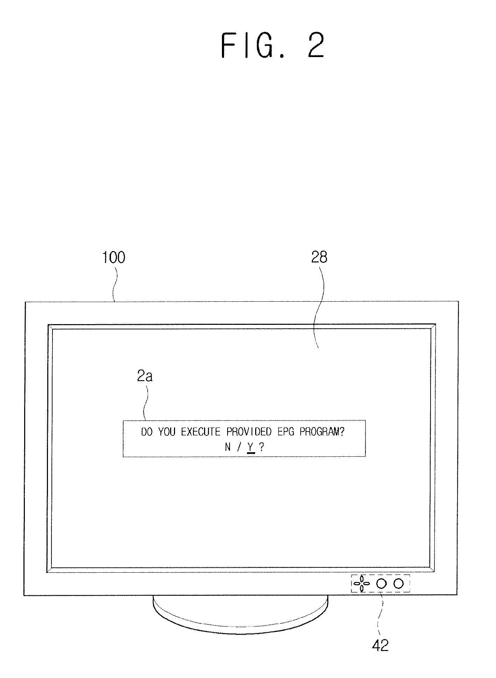

As shown in FIG. 2, the user inputting part 40 may be supplied as a key 42 in a front of the digital TV 100. Also, the user input part 40 may be supplied as an additional-connected inputting means, that is, a mouse, a keyboard or a remote controller. Here, if a user inputs by a key, the key signal generating part generates a key signal corresponding to the inputted key, and the key signal is supplied to the controller 60. Accordingly, the controller 60 can perform a controlling operation corresponding to the key signal inputted from the key signal generating part.

The key combination information determining part 32, on the basis of the PSI/SI information of the service additional information included in the received broadcasting signal, determines whether or not there is key combination information in the currently selected broadcasting signal. When the key combination information determining part 32 recognizes that there is key combination information in the currently selected broadcasting signal, the key combination information determining part 32 informs the detecting part 35 that there is the key combination information in the currently selected broadcasting signal.

The detecting part 35 detects an application program included in the received broadcasting signal, and detects the key combination information on the basis of the determination result from the key combination information determining part 32. That is, the detecting part 35 may comprise a key combination information detecting part 34 detecting the key combination information from the received broadcasting signal. The key combination information detecting part 34 detects the key combination information from the received broadcasting signal. Then, the key combination information detecting part 34 processes the detected key combination information as a format that the controller 60 can recognize. That is, the key combination information detecting part 34 decodes the detected key combination information into a format capable of being recognized by the controller 60.

The storing part 37 stores the detected and outputted application program from the detecting part 35, and the detected/processed and outputted key combination information from the detecting part 35. The storing part 37 also may store basic key information originally stored in the digital TV 100. Here, the basic key information comprises information originally stored when the digital TV 100 is manufactured. Also, the basic key information comprises key mapping information capable of performing an operation corresponding to each of key input (e.g. up and down of channels, up and down of volume and the like).

When an application program provided through a broadcasting signal and stored in the storing part 37 is operated, if a combination such as a combination of at least two keys is inputted within a predetermined time, the controller 60 performs a related operation of the combination of the inputted keys on the basis of the key combination information stored in the storing part 37 corresponding to the above application program. This controller 60 comprises a microcomputer 65 and an application program operating part 64. Here, a combination of keys may be realized when each key is inputted continuously in sequence, each key is inputted simultaneously with other keys and/or a key is inputted while the other keys are under an input state.

When an application program is provided through a broadcasting signal and stored in the storing part 37 the basic setup of the digital TV 100 may be set so "an application program is automatically operated." Thus, if the application program is stored in the storing part 37 it may be automatically operated. Alternatively, an application program stored in the storing part 37 may be operated when, as shown in FIG. 2, an operation selecting menu 2a guiding a user's selection is automatically displayed, and an operation is selected by a user. Further, an application program stored in the storing part 37 may be operated when the user operates the user inputting part 40.

The application program operating part 64 operates the application program provided through the broadcasting signal and stored in the storing part 37. That is, if the initial setup of the digital TV 100 is such that "an application program is automatically operated", the application program operating part 64 can operate the application program provided through the broadcasting signal and stored in the storing part 37 automatically. Further, if the operation selecting menu 2a is selected by the user, or an operation of the application program is selected through another route, the application program operating part 64 can operate a concerned application program stored in the storing part 37.

The microcomputer 65 recognizes whether or not the application program is currently operated through an interface with the application program operating part 64. If the application program is currently operated, the microcomputer 65 recognizes key combination information corresponding to the currently operating application program among the key combination information provided through the broadcasting signal and stored in the storing part 37. The microcomputer 65 monitors a key inputted through the user inputting part 40 on the basis of a key signal inputted from the user inputting part 40.

Accordingly, if the application program is currently operated, the microcomputer 65 performs a control operation according to a key signal inputted from the user inputting part 40 on the basis of key combination information corresponding to the current application program, and the basic key information stored initially in the storing part 37. Conversely, if an application program is not being operated, the microcomputer 65 performs the control operation according to a key signal inputted from the user inputting part 40 on the basis of the basic key information. Here, if the current application program is operated, the microcomputer 65 may perform the control operation according to a key signal inputted from the user inputting part 40, on the basis of a preference of the key combination information corresponding to the currently operating application program among the key combination information and the basic key information stored basically in the storing part 37.

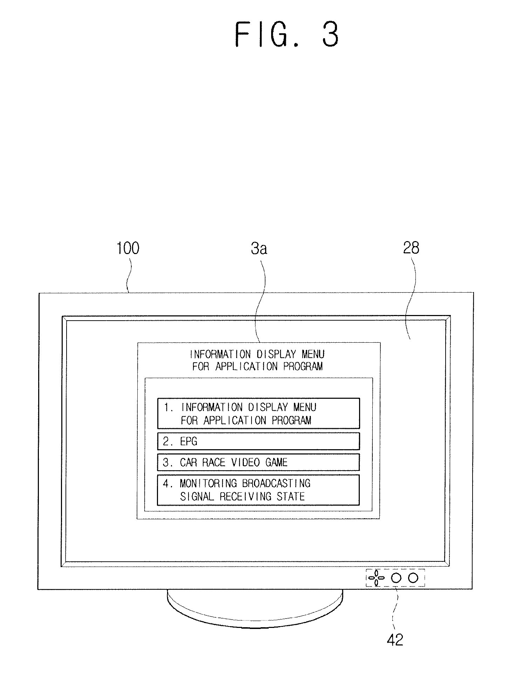

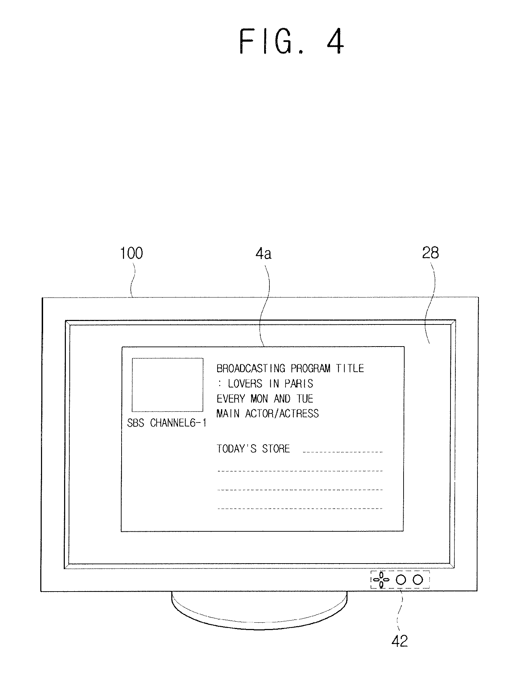

Here, the first exemplary embodiment of the digital broadcasting system according to the present invention will be described with reference to FIG. 3 and 4. For example, if a broadcasting channel (e.g. CH6-1) is selected in the digital TV 100, the digital TV 100 replays a broadcast according to a broadcasting signal provided by a broadcasting base station 200 (e.g. SBS (Seoul Broadcasting System) base station) of the currently selected channel CH6-1. At this time, the broadcasting base station 200 provides the broadcasting signal by allowing the broadcasting signal to comprise an application program and key combination information corresponding to the application program thereof. At this time, it is explained that the broadcasting base station 200 provides application programs such as "an information display program for an application program", "a monitoring program for a broadcasting signal receiving state", "an information display program for EPG," an application program for "car racing game program" and key combination information corresponding to each of the above-listed application programs. Additionally, "an information display program for an application program", "a monitoring program for a broadcasting signal receiving state", "an information display program for EPG," the application program for "car racing game program" and the key combination information corresponding to each of the above-listed application programs is stored in the storing part 37.

While the microcomputer 65 monitors a key inputted through the user inputting part 40, if the microcomputer 65 recognizes a signal input from an application key asking for an information display of the application program stored in the storing part 37, the microcomputer 65 performs a control operation according to the application key information. That is, if the application key is inputted, the microcomputer 65 controls the application program operating part 64 so that "the information display program for an application program" stored in the storing part 37 can be operated. Accordingly, the user interface generating part 26 generates an information display menu 3a for the application program as shown in FIG. 3 by control of the application program operating part 64 that operates "the information display program for an application program."

The microcomputer 65 recognizes an operation of "the information display program for an application program" and key combination information stored in the storing part 37 corresponding to "the information display program for an application program."

Here, the key combination information corresponding to "the information display program for an application program" may comprise information such as the Table 1 below.

**Table 1**

| Combination Data | Command Data |
|---|---|
| APP + Numeral Key (e.g. 2) | Operating application program of corresponding numeral item(e.g.: 2) of information display menu for application program. |
| APP + Numeral Key + Numeral Key | Displaying corresponding numeral item(e.g.: 6) according to operation of application program of numeral item (e.g.: 2) of information display menu for current application program. |
| APP + Numeral Key + EXIT | Ending application program of corresponding numeral item(e.g.: 2) of information display menu for application program. |
| APP + Numeral Key + INFO | Displaying detailed information related to application program of corresponding numeral item (e.g.: 2) of information display menu for application program. |

Accordingly, while the microcomputer 65 monitors a key inputted through the user inputting part 40, if a key signal of the basic key information is inputted, the microcomputer 65 performs a control operation according to the basic key information. If a combination of keys is inputted, the microcomputer 65 determines whether or not the combination of the inputted keys is corresponded with any one among combination data of key combination information of Table 1. When the combination of the inputted keys corresponds with any one among combination data of key combination information of Table 1, the microcomputer 65 performs an operation according to the command data corresponding to the corresponding combination data. When the combination of the inputted keys does not correspond with any one among key combination information, the microcomputer 65 may disregard the combination of the inputted keys.

For example, if the combination of the application key (APP) and the numeral key "2" is inputted, the microcomputer 65 controls the application program operating part 64, and "the information display program for EPG" of the item 2 of the information display menu for an application program is operated on the basis of the key combination information. Accordingly, the user interface generating part 26 generates an EPG information menu by control of the application program operating part 64 that operates "the information display program for EPG." The microcomputer 65 recognizes the operation of "the information display program for EPG", and the key combination information stored in the storing part 37 corresponding to "the information display program for EPG." The key combination information corresponding to "the information display program for EPG" may be different from the key combination information of the Table 1. Thus, if a user inputs the combination of the application key (APP) and the numeral key "2" in the middle of watching a broadcasting program, the EPG information menu is displayed immediately. Then, the microcomputer 65 performs a control operation according to a key inputted through the user inputting part 40 on the basis of key combination information corresponding to "the information display program for EPG", key combination information corresponding to "the information display program for an application program", and the basic key information.

For another example, if the combination of the application key (APP), the numeral key "2", the numeral key "6" and an information key (INFO) is inputted, the microcomputer 65 operates "the information display program for EPG" of the item 2 of the information display menu for an application program on the basis of the key combination information, and controls the application program operating part 64 so that detailed information of a program broadcasted in a channel (e.g. CH6-1) of the item 6 of the EPG information menu according to an operation of "the information display program for EPG" is displayed. Accordingly, the user interface generating part 26 generates a detailed information menu 4a of the program broadcasted in the channel CH6-1 as shown in FIG. 4 by control of the application program operating part 64. At this time, the microcomputer 65 recognizes the operation of "the information display program for EPG", and key combination information stored in the storing part 37 corresponding to "the information display program for EPG." Thus, if a user inputs the combination of the application key (APP), the numeral key "2", the numeral key "6" and an information key (INFO) in the middle of watching a broadcasting program, immediately, the detailed information menu 4a of the broadcasting program of the broadcasting channel "CH6-1" is displayed as shown in FIG. 4.

Also, if the combination of the application key (APP) and the numeral key "4" is inputted, the microcomputer 65 controls the application operating part 64 so that "a monitoring program for a receiving state of a broadcasting signal" of the item 4 of the information display menu for an application program is operated on the basis of key combination information. Accordingly, while the application program operating part 64, which operates "the monitoring program for a receiving state of a broadcasting signal", monitors the receiving state of the broadcasting signal, if an error occurs, the application program operating part 64 can inform the user of the error. Thus, if the user inputs the combination of the application key (APP) and the numeral key "4" in the middle of watching a broadcasting program, immediately, the program for monitoring the receiving state of the broadcasting signal will be displayed.

The microcomputer 65 recognizes the execution of the monitoring program for a receiving state of a broadcasting signal and the stored key combination information corresponding to the monitoring program for a receiving state of a broadcasting signal. The key combination information corresponding to "the monitoring program for a receiving state of a broadcasting signal" may be different from the key combination information of the Table 1 and the key combination information corresponding to "the information display program for EPG." Then, the microcomputer 65 performs a control operation according to a key inputted through the user inputting part 40 on the basis of the key combination information corresponding to "the monitoring program for a receiving state of a broadcasting signal", the key combination information corresponding to "the information display program for an application program", and the basic key information.

Accordingly, when "the monitoring program for a receiving state of a broadcasting signal" is operated, if the combination of the application key (APP), the numeral key "4" and an EXIT key is inputted through the user inputting part 40, the microcomputer 65 controls the application program operating part 64 so that the operation of "the monitoring program for a receiving state of a broadcasting signal" can be finished. Thus, if the user inputs the combination of the application key (APP), the numeral key "4 " and the EXIT key, the program for monitoring the receiving state of the broadcasting signal is finished immediately.

Here, in the described exemplary embodiment with reference to FIG. 3 and 4, it is explained that when "the information display program for an application program" is operated, the microcomputer 65 performs a control operation on the basis of the key combination information corresponding to "the information display program for an application program."

Unlike this, if an EPG key is simply inputted regardless of the operation of "the information display program for an application program", the microcomputer 65 can control the application program operating part 64 by performing a control operation according to the basic key information so that "the information display program for EPG" is operated. Accordingly, the microcomputer 65 recognizes that "the information display program for EPG" is operated, and the microcomputer 65 can perform a control operation on the basis of the key combination information corresponding to "the information display program for EPG."

Accordingly, the digital broadcasting system according to the exemplary embodiment of the present invention, when an application function is performed by operating an application program that is provided to a digital TV 100, can control the application function on the basis of key combination information of the operated application program by further providing key combination information corresponding to each of the application programs that a broadcasting base station 200 provides. That is, since the key combination control operates differently for different application programs, the same key combination may perform different control operation.

Thus, the digital broadcasting system according to the exemplary embodiment of the present invention, when operating each application function provided by each broadcasting base station 200, can control actively application functions with by the efficient use of a limited number of keys by inputting a suitable combination of keys corresponding to the application program, thereby controlling an application function.

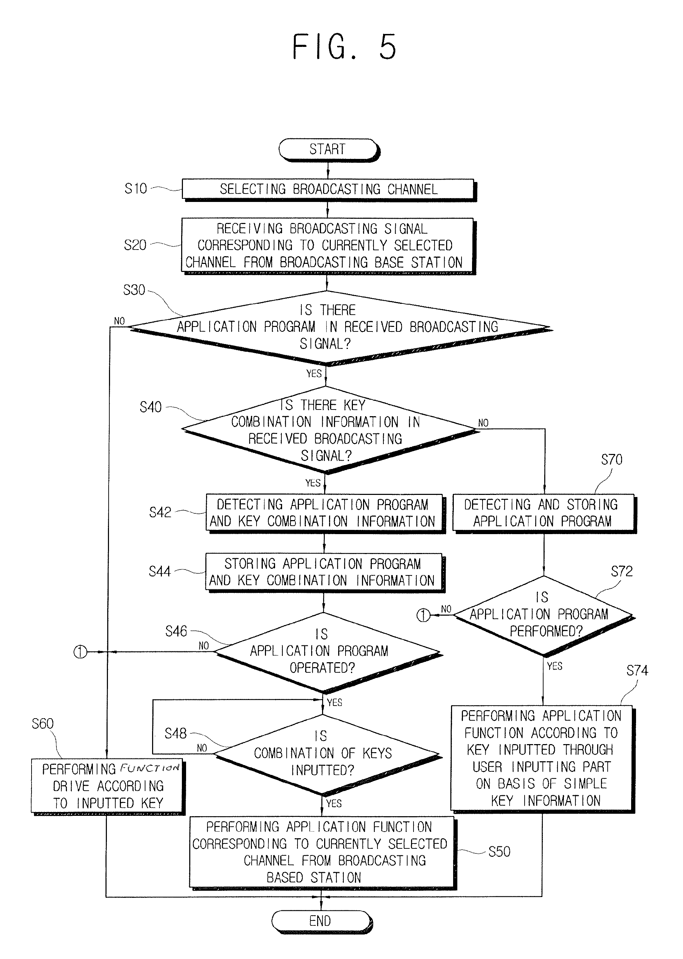

Hereinafter, an exemplary embodiment of a control method of the digital broadcasting system according to the present invention having these constructions as described above will be described with reference to FIG. 5.

First, if a broadcasting channel (EX: CH6-1) is selected in a digital TV 100 (operation S10), the digital TV 100 receives a broadcasting signal that the broadcasting base station 200 (EX: SBS (Seoul broadcasting system) base station) of the current-selected channel CH6-1 provides, and replays a broadcasting program thereof (operation S20). At this time, the broadcasting base station 200 provides the broadcasting signal by allowing the broadcasting signal to comprise an application program, and key combination information corresponding to the application program.

The detecting part 35 of the digital TV 100 determines whether there is an application program in the received broadcasting signal (operation S30). In the operation S30, when there is no application program in the received broadcasting signal, the digital TV 100 performs a general drive according to an inputted key (operation S60) by using a system program stored initially when the digital TV 100 is manufactured, and the corresponding basic key information.

In the operation S30, when there is the application program in the received broadcasting signal, the key combination information determining part 32 determines whether or not there is key combination information in the received broadcasting signal (operation S40). Then, when there is no key combination information in the received broadcasting signal, the detecting part 35 detects the application program in the broadcasting signal, and the storing part 37 stores the detected application program (operation S70). The microcomputer 65 determines whether or not the application program stored in the storing part 37, that is the application program provided from the broadcasting base station 200, is operated (operation S72). When the application program is not performed (referring to the mark 1 in FIG. 5), , the digital TV 100 performs a general drive according to an inputted key (operation S60) by using a system program stored initially when the digital TV 100 is manufactured, and the corresponding basic key information. Conversely, when the application program is operated, the microcomputer 65 performs an application function according to a key inputted through the user inputting part 40 on the basis of simple key information provided by the application program (operation S74). Here, the simple key information comprises a key interface that is provided by the broadcasting base station 200 providing the application program and is included in the MHEG information of the broadcasting signal. Also, the simple key information comprises key information for controlling an application function by the concerned application program corresponding to an inputted simple key. Since a related art broadcasting system comprises this above-described technology, detailed description is omitted. Here, in the operation S74, if there is no simple key information provided by the application program, the microcomputer 65 may perform an application function according to a key inputted through the user inputting part 40 on the basis of the basic key information.

In the operation S40, if there is key combination information in the received broadcasting signal, the detecting part 35 detects the application program and the key combination information in the broadcasting signal (operation S42). The storing part 37 stores the detected application program and the detected key combination information (operation S44). The microcomputer 65 determines whether or not the application program stored in the storing part 37, that is the application program provided from the broadcasting base station 200, is operated (operation S46). If the application program is not operated, the digital TV 100 performs a general function according to a key inputting (operation S60) by using the system program and the basic key information stored initially when the digital TV 100 is manufactured.

If the application program is operated, the microcomputer 65 determines whether or not a combination of keys is inputted (operation S48). If the combination of keys is inputted, the microcomputer 65 performs an application function of the combination of the inputted keys on the basis of key combination information corresponding to the operated application program among stored key combination information (operation S50). Here, if a simple key, not a combination of keys, is inputted in the operation S48, which is not shown in FIG. 5, the microcomputer 65 may perform an application function according to the inputted simple key on the basis of simple key information provided by the operated application program, or the basic key information.

As described above, a control method of the digital broadcasting system according to the exemplary embodiment of the present invention, when operating an application program that is provided to a digital TV, thereby performing an application function, may control the application function on the basis of the key combination information of the operated application program by further providing key combination information corresponding to each of the application programs provided by the broadcasting base station.

Thus, in digital broadcasting systems according to exemplary embodiments of the present invention, when operating each application function provided by each broadcasting base station, a user may actively control the application function by the efficient use of limited number of keys of the user inputting part by inputting a suitable combination of keys corresponding to a concerned application program, thereby controlling the application function.

As described above, according to the exemplary embodiment of the present invention, there is provided a digital TV and a digital broadcasting system capable of actively controlling an application function by the efficient use of limited number of keys, when operating an application program, by inputting a combination of suitable keys corresponding to the concerned application program, thereby controlling the application function, and the control method thereof.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital broadcasting system comprising:
a broadcasting base station (200) which transmits a broadcasting signal having a program and key combination information configured to control a function of the program; and
a digital television (TV) (100) comprising:
a receiving part (10,20) which receives the broadcasting signal;
a detecting part (35) which detects the program and the key combination information provided through the broadcasting signal;
a storing part (37) which stores the program and the key combination information outputted by the detecting part; and
a controller (60) which performs the function corresponding to a combination of keys inputted from a user inputting part (40) on the basis of the key combination information.

2. The digital broadcasting system according to claim 1, wherein the combination of keys comprises a combination of at least two keys inputted within a predetermined time.

3. The digital broadcasting system according to claim 1 or 2, wherein the controller (60) only performs the function if the program is being operated.

4. The digital broadcasting system according to claim 1, 2 or 3, wherein the key combination information comprises at least one item of combination data corresponding to a combination of at least two keys, and command data for controlling the function of the program, corresponding to the combination data.

5. The digital broadcasting system according to any preceding claim, wherein the controller monitors keys inputted through the user inputting part (40) when the program stored in the storing part is operated, and performs the function according to command data corresponding to the combination of keys corresponding to combination data.

6. The digital broadcasting system according to any preceding claim, wherein the digital TV (100) further comprises a key combination information determining part (34) which determines whether the key combination information is in the broadcasting signal received through the receiving part,
wherein the detecting part (35) detects the key combination information if the key combination detecting part (34) determines that the key combination information is in the broadcasting signal, and processes the key combination information detected to generate a format compatible with the controller (60).

7. The digital broadcasting system according to any preceding claim, wherein the storing part (37) further stores basic key information originally stored in the digital TV,
wherein the controller performs a basic function corresponding to at least one key inputted through the user inputting part on a basis of the basic key information when the program stored in the storing part is not being operated.

8. The digital broadcasting system according to any preceding claim, wherein the program is provided by the broadcasting base station through the broadcasting signal, and comprises an application program for supporting a broadcast provided by the broadcasting base station, and
wherein the user inputting part comprises at least any one among: a plurality of numeral keys, an application key asking for an information display of the application program stored in the storing part, an EPG (electric program guide) key asking for an EPG display, an information key asking for a detailed information display, and an EXIT key.

9. A digital TV (100) comprising:
a receiving part (10,20) which receives a broadcasting signal having a program and key combination information configured to control a function of the program;
a detecting part (35) which detects the program and the key combination information provided through the broadcasting signal;
a storing part (37) which stores the program and the key combination information outputted by the detecting part (34); and
a controller (60) which performs the function corresponding to the combination of keys inputted from a user inputting part (40) on the basis of the key combination information.

10. The digital TV according to claim 9, wherein the combination of keys comprises a combination of at least two keys inputted within a predetermined time.

11. The digital TV according to claim 9 or 10, wherein the controller (60) only performs the function if the program is being operated.

12. The digital TV according to claim 9, 10 or 11, wherein the key combination information comprises at least one item of combination data corresponding to a combination of at least two keys, and command data for controlling the function of the program, corresponding to the combination data.

13. The digital TV according to any one of claims 9-12, further comprising a key combination information determining part (32) which determines whether the key combination information is in the broadcasting signal received through the receiving part, and
wherein the detecting part (35) detects the key combination information if the key combination detecting part (32) determines that the key combination information is in the broadcasting signal, and processes the key combination information detected to generate a format compatible with the controller (60).

14. The digital TV according to any one of claims 9-13, wherein the storing part stores basic key information originally stored in the digital TV,
wherein the controller performs a basic function corresponding to at least one key inputted through the user inputting part on a basis of the basic key information when the program stored in the storing part (37) is not being operated.

15. A control method of a digital television (TV) comprising:
receiving a broadcasting signal having a program and key combination information configured to control a function of the program in the digital TV;
detecting the program and the key combination information from the broadcasting signal, and then storing the program and the key combination, after receiving the broadcasting signal;
operating the program;
monitoring whether a combination of keys inputted corresponds to the key combination information, when the program is operated; and
performing the function of the combination of keys on the basis of the stored key combination information, if the combination of keys is inputted.

16. The control method of the digital TV according to claim 15, wherein the key combination information comprises combination data corresponding to a combination of at least two keys, and command data for controlling the function by the program.

17. The control method of the digital TV according to claim 15 or 16, wherein the performing the function of the combination of keys if the stored program is operated, comprises
monitoring whether a key is inputted through the user inputting part,
determining whether the combination of keys corresponding to the combination data of the key combination information is inputted when at least two keys are inputted within a predetermined time, and
performing the function according to command data corresponding to the combination data when the combination of keys corresponding to the combination data of the key combination information is inputted.

18. The control method of the digital TV according to any one of claims 15-17, wherein the detecting the key combination information, and then storing the program and the key combination, comprises
determining whether the key combination information is in the received broadcasting signal,
detecting the key combination information from the received broadcasting signal when the key combination information is in the received broadcasting signal, and
processing the key combination information detected to generate a compatible format.

19. The control method of the digital TV according to any one of claims 15-18, further comprising:
storing basic key information originally stored in the digital TV,
performing a basic function of the key inputted through the user inputting part on a basis of the basic key information when the stored program is not being operated.

20. The control method of the digital TV according to any one of claims 15-19, wherein the program provided through the broadcasting signal, comprises an application program for supporting a broadcast provided by a broadcasting base station.

21. The control method of the digital TV according to any one of claims 15-20, wherein the user inputting part comprises at least any one among a plurality of numeral keys, an application key asking for an information display of the application program stored in the storing part, an EPG (electric program guide) key asking for an EPG display, an information key asking for a detailed information display, and an EXIT key.
